# EUROPEAN PATENT SPECIFICATION

(11) **EP 3 537 712 B1**
(45) Date of publication and mention of the grant of the patent: **26.11.2025**
(21) Application number: 18160865.4
(22) Date of filing: 09.03.2018
(51) Int. Cl.: H04N 7/14, G01C 21/36

(54) **METHOD, SYSTEM AND COMPUTER PROGRAM PRODUCT FOR CONTROLLING A VIDEO CALL WHILE DRIVING A VEHICLE**
VERFAHREN, SYSTEM UND COMPUTERPROGRAMMPRODUKT ZUR STEUERUNG EINES VIDEOANRUFS WÄHREND DES FAHRENS EINES FAHRZEUGS
PROCÉDÉ, SYSTÈME ET PRODUIT-PROGRAMME INFORMATIQUE PERMETTANT DE COMMANDER UN APPEL VIDÉO DURANT LA CONDUITE D'UN VÉHICULE

(43) Date of publication of application: 11.09.2019
(73) Proprietor: Bayerische Motoren Werke Aktiengesellschaft, 80809 München (DE)
(72) Inventor: Metzler, Anne, Mountain View, CA California 94043 (US)

(56) References cited:
- EP-A1- 2 735 466
- GB-A- 2 525 039
- US-A1- 2008 154 499
- US-A1- 2011 187 547
- US-A1- 2016 054 795

## Description

### Field of invention

The present invention relates to a method for controlling a video call while driving a vehicle. Further, the present invention relates to a system and a computer program product for controlling a video call while driving a vehicle.

### Background Art

Current in-vehicle communication systems use hands-free voice calling. Further, some in-vehicle communication systems provide in-car video chats when the car is parking. However, current in-vehicle communication systems do not provide an in-car video feed to an external party while driving the car. Further, a location information may be exchanged only as a voice information using current in-vehicle communication systems during a voice call or a video call. Describing a current vehicle location via voice while driving or entering a new destination into a navigation system while driving and talking requires a high cognitive load and might be extremely distracting to the driver.

EP 2 735 466 A1 discloses a method and a communication device for controlling incoming video stream in a vehicle. The communication device acquires information related to the vehicle, and enables or disables the display of the video stream on the communication device depending on the acquired information.

US 2016/0054795 A1 describes an information display device including: an image input section that inputs an image corresponding to a user's field of vision, a line-of-sight detection section that detects a point of gaze indicative of a position of a line of sight in the user's field of vision, an object recognition section that extracts as a first region a region in the image of an object including the point of gaze from the image, a display position determination section that determines as a display position a position on which a user's line of sight does not fall in the field of vision based on information on the first region, and an information display section that displays information to be presented to a user at the display position.

US 2011/0187547 A1 describes an information display apparatus and a method thereof capable of allowing a user to conveniently and safely drive by displaying a sender's information corresponding to a call signal, on a windshield of a vehicle, through a display unit such as a Head-Up Display or a projector, if the vehicle is in a running state when the call signal is received. The information display apparatus comprises a communication unit configured to receive a call signal, and a controller configured to detect a vehicle speed when the call signal is received, and configured to display a sender's to information corresponding to the call signal, on a display unit, based on the vehicle speed.

US 2008/0154499 A1 described a position display apparatus and a position of an outside apparatus which comprises a position acquiring part adapted to quire a first information indicative of the own position and a wireless communication part adapted to receive a second information indicative of the position of the outside apparatus, a map display adapted to display the positions and a controller to control the map display.

Accordingly, there may be a need for efficiently providing a video call while driving a vehicle. In particular, there may be a need for efficiently simplifying a location information exchange during a video call while driving a vehicle.

### Summary of the Invention

This need may be met by the subject matter according to the independent claims.

Advantageous embodiments of the present invention are described by the dependent claims.

According to a first aspect of the invention, there is provided a method for controlling a video call while driving a vehicle. The vehicle may be a car. The method receives a request to start a video call from a calling party to a user of the vehicle while driving a vehicle. The request to start the video call may be received by an in-vehicle communication system. The in-vehicle communication system may provide one or more communication channels based on different wireless communication protocols, e.g. common short range and long range mobile communication protocols. In response to the request to start the video call from the calling party, the method displays, by an output interface of the vehicle, the request to start the video call from the calling party to the user of the vehicle, and receives, by an input interface of the vehicle, a first control command of the user to start the video call. The first control command may be a voice command, a gesture command, a touch command, and/or a command based on an interaction with a physical or a virtual input device. The method determines a field of view of the user of the vehicle, and determines a display in the field of view of the user of the vehicle. The field of view of the user and the display in the field of view of the user may be determined by one or more interior cameras and/or further sensors of the vehicle. If the user of the vehicle is a driver of the vehicle, the method displays a still image, e.g. a static image, a default image, or an icon, corresponding to the video call from the calling party on the determined display in the field of view of the driver.

This may provide the advantage that a driver is not distracted by the video call since the driver does not see a video of the calling party while driving the vehicle. Accordingly, the safety of in-car video telephony is efficiently increased. The driver of the vehicle may see only a static image of the calling party, but the calling party may receive a live video stream from within the vehicle. In addition, the driver may control the video call by a single command using an available input interface of the vehicle. Accordingly, the cognitive load of the driver controlling the video call is significantly reduced. The access to the video call while driving the vehicle is simplified for the driver and any other user of the vehicle.

According to an embodiment of the invention, the method may further display a video stream, in particular a live video stream, of the video call on one or more displays outside the field of view of the driver to one or more other users of the vehicle, if the user of the vehicle is the driver of the vehicle. This may provide the advantage that occupants or passengers of the vehicle without the driver may see the video stream of the calling party.

According to a further embodiment of the invention, the method may display, if the user is an occupant of the vehicle, a video stream of the calling party on the determined display in the field of view of the occupant of the vehicle. This may provide the advantage that the occupants or the passengers of the vehicle have full access to the video stream of the calling party, e.g. the occupants or the passengers may see the video stream of the calling party on a display of the vehicle.

According to a further embodiment of the invention, the method may transmit, by an interior camera of the vehicle, a video stream, in particular a live video stream, of the user to the calling party once the first control command of the user to start the video call is received, and/or may transmit, by each interior camera of the vehicle, a video stream to the calling party once the first control command of the user to start the video call is received. This may provide the advantage that the vehicle may transmit one or more video streams of the user of the vehicle. For example, if the vehicle comprises an interior camera for each occupant or passenger of the vehicle and an interior camera for the driver, the vehicle may transmit as many video streams as occupants are in the vehicle and the video stream of the driver to the calling party. Accordingly, a group video chat may be set up in a simple and efficient manner. According to a further embodiment of the invention, the method may receive a request to receive or share a location from the calling party to the user of the vehicle during the video call. The location may comprises a location information, e.g. location data and/or location metadata. In response to receiving the request to receive or share the location during the video call the method displays, by the output interface of the vehicle, the request to receive the location from the user to the user of the vehicle, and receives, by the input interface of the vehicle, a second control command from the user to receive or share the location from the calling party. In response to the second control command, the method may receive the location from the calling party or share the location with the calling party. For the receiving or sharing of the location the communication channel of the video call is used, according to the present invention.

In an example not covered by the claims, an additional communication channel may be used to receive or share the location. This may provide the advantage that a receiving or a sharing or location information during the video call is efficiently simplified.

According to a further embodiment of the invention the method may provide the received location from the calling party to a navigation component, e.g. a navigation system, of the vehicle. And, the method may adapt a current route of the navigation system based on the received location from the calling party during the video call. Alternatively, the method may create a new route to the received location from the calling party during the video call. This may provide the advantage that the video call may adapt the navigation system so that information exchanged during the video call is efficiently integrated into the navigation system. Accordingly, the control of the navigation system is simplified by a control command during the video call.

According to a further embodiment of the invention, the method may receive, by the input interface of the vehicle, a third control command from the user to send the location of the vehicle and/or a user-specified location to the calling party, and/or may transmit the location of the vehicle and/or the user-specified location to the calling party once the calling party indicated that the calling party accepts the location of the vehicle and/or the user-specified location from the user. This may provide the advantage that a transfer of a location or a location information during a video call is efficiently simplified while driving a vehicle. According to a further embodiment of the invention, the field of view of the user of the vehicle may be determined by one or more interior cameras of the vehicle, and/or the display in the field of view of the user of the vehicle may be determined by one or more interior cameras of the vehicle. This may provide the advantage that the safety during a video call while driving the vehicle is efficiently increased.

According to the claimed invention, the location, in particular the location of the vehicle, is received and/or transmitted as a continuous live stream during the video call. This may provide the advantage that the location information may be exchanged in realtime during the video call while driving the vehicle. A more accurate location of the vehicle may be available to the calling party.

According to a further aspect of the invention, there is provided a system for controlling a video call while driving a vehicle. The system comprises a processor, a memory, and instructions stored within the memory, wherein the instructions, when executed on the processor, cause the system to receive a request to start a video call from a calling party to a user of the vehicle while driving a vehicle. In response to the request to start the video call from the calling party, the instructions, when executed on the processor, cause the system to display, by an output interface of the vehicle, the request to start the video call from the calling party to the user of the vehicle, to receive, by an input interface of the vehicle, a first control command of the user to start the video call, to determine a field of view of the user of the vehicle, to determine a display in the field of view of the user of the vehicle, and, if the user of the vehicle is a driver of the vehicle, to display a still image corresponding to the video call from the calling party on the determined display in the field of view of the driver. According to a further aspect of the invention, there is provided a computer program product for controlling a video call while driving a vehicle, the computer program product, when being executed by a processor, is adapted for controlling and/or for carrying out the method as described above.

As used herein, reference to a computer program or a computer program product is intended to be equivalent to a reference to a program element and/or to a computer readable medium containing instructions for controlling a computer system to coordinate the performance of the above described method.

The computer program may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

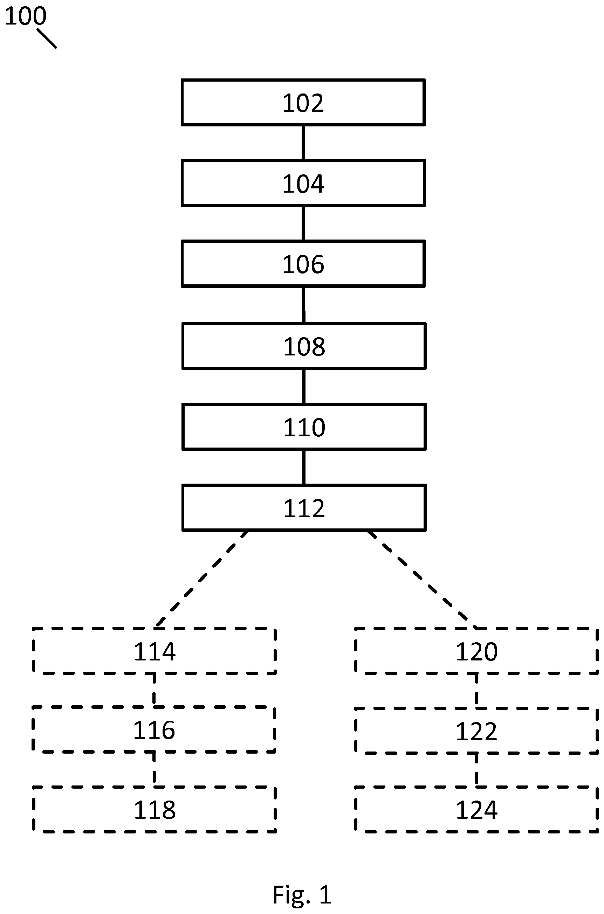

**Figure 1** shows an exemplary method for controlling a video call while driving a vehicle.

### Detailed Description

In particular, **Figure 1** shows a method 100 for controlling a video call while driving a vehicle. The method 100 may receive 102 a request to start a video call from a calling party to a user of the vehicle while driving a vehicle. The user of the vehicle may be the driver of the vehicle or an occupant of the vehicle. In response to the request to start the video call from the calling party, the method may display 104 the request to start the video from the calling party to the user of the vehicle. The request may be displayed by an output interface of the vehicle to the user. Exemplary output interfaces may be a heads-up display, a speaker, and/or a display integrated into the vehicle.

The method 100 may receive 106, by an input interface of the vehicle, a first control command of the user to start the video call with the calling party. The input interface of the vehicle may be a microphone, a touch interface, a gesture interface, and/or any other common input interface. Preferably, the first control command is a voice command. For example, the voice command "accept call" may accept the request for a video call of the calling party and may start the video call.

Further, the method may determine 108 a field of view of the user of the vehicle using one or more interior cameras of the vehicle. And, the method may determine 110 a display in the field of view of the user of the vehicle. If the user of the vehicle is a driver of the vehicle, the method may display 112 a still image or a static image corresponding to the video call from the calling party on the determined display in the field of view of the driver. By displaying the still image or the static image in the field of view of the driver, the safety of the in-vehicle video telephony is efficiently increased. The driver does not receive any video stream within the field of view of the driver. Accordingly, the driver the cognitive load of the driver is reduced and/or the driver might not be distracted by the video stream of the video call.

By using an interior camera of the vehicle, the method provides the video stream of the user to the calling party. In any case, the calling party may receive the video stream of the user even if the user might not see the video stream of the calling party. In particular, front and/or rear passenger may receive the video stream of the calling party in a display within their field of view. In contrast, the driver may see only a still image from the calling party on a display in the field of view of the driver.

In addition, the user may receive 114 a request to receive a location from the calling party to the user of the vehicle during the video call. In response to receiving 114 the request to receive the location during the video call, the request to receive the location from the user is displayed 116 by the output interface of the vehicle to the user of the vehicle, and a second control command is received 118 from the user by the input interface of the vehicle to receive the location from the calling party. For example, the second control command may be a voice command, e.g. "accept location". When the second control command is received 118, the location is received from the calling party and stored in the navigation component of the vehicle. A route of the navigation component may be adapted to the stored location of the navigation component of the vehicle.

Alternatively, the user may send to the calling party or share with the calling party a location, e.g. a location information or location data. The method 100 may receive 120 a third control command from the user by the input interface of the vehicle to send the location to the calling party or share the location with the calling party. The location may be the location of the vehicle and/or a user-specified location. After receiving 120 the third control command, the location may be transmitted 122 to the calling party once the calling party indicated that the calling party accepts the location from the user and/or the location may be received 124 from the calling party once the calling party indicated that the calling party shares the location with the user. For example, the voice command "share location" may share the location with calling party. For example, the voice command "send location" may send the location to the calling party. The location is received from the calling party and/or stored in a navigation component of the vehicle. Further, the location may be provided to the navigation component of the vehicle, which may adapt a current route of the navigation component based on the received location from the calling party during the video call.

For example, the calling party may be a person of an emergency service. When accepting the request to start a video call with the person of the emergency service, the emergency service may access a situation inside the vehicle and provide the passengers with help while driving the vehicle.

Advantageously, the method provides in-car video telephony with increased safety while driving the vehicle. Further, the method improves a driving experience for passengers who are able to communicate with a calling party via a video call. Finally, a sharing of location information between the driver or a passenger of the vehicle and a calling party is simplified during the video call while driving the vehicle.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

### List of reference signs

- 100: method
- 102: receiving request to start a video call
- 104: displaying the request
- 106: receiving a first control command
- 108: determining a field of view
- 110: determining a display in the field of view
- 112: displaying a still image
- 114: receive a request to receive a location
- 116: display the request
- 118: receive a second control command to receive the location
- 120: receive a third control command
- 122: transmit a location
- 124: receive a location

## Claims

1. Method for controlling a video call while driving a vehicle, the method comprising:
- receiving (102) a request to start a video call from a calling party to a user of the vehicle while driving a vehicle;
in response to the request to start the video call from the calling party:
- displaying (104), by an output interface of the vehicle, the request to start the video call from the calling party to the user of the vehicle;
- receiving (106), by an input interface of the vehicle, a first control command of the user to start the video call;
- determining (108) a field of view of the user of the vehicle;
- determining (110) a display in the field of view of the user of the vehicle;
if the user of the vehicle is a driver of the vehicle:
- displaying (112) a still image corresponding to the video call from the calling party on the determined display in the field of view of the driver; and
- receiving (114) a request to accept a location from the calling party during the video call, wherein, for receiving the location, a communication channel of the video call is used; and
in response to receiving the request to accept the location during the video call:
- displaying (116), by the output interface of the vehicle, the received request to the user of the vehicle; and
- receiving (118), by the input interface of the vehicle, a second control command from the user to receive the location from the calling party;
- when the second control command is received, receiving, over the communication channel of the video call, the location as a continuous live stream from the calling party and storing the received location in a navigation component of the vehicle; and
- adapting a current route of the navigation component based on the received location from the calling party during the video call.

2. Method according to claim 1, the method further comprising:
if the user of the vehicle is the driver of the vehicle:
displaying a video stream of the video call on one or more displays outside the field of view of the driver to one or more other users of the vehicle.

3. Method according to any one of claims 1 to 2, the method further comprising:
if the user is an occupant of the vehicle:
- displaying a video stream of the calling party on the determined display in the field of view of the occupant of the vehicle.

4. Method according to any one of claims 1 to 3, the method further comprising:
transmitting, by an interior camera of the vehicle, a video stream of the user to the calling party once the first control command of the user to start the video call is received; and/or
transmitting, by each interior camera of the vehicle, a video stream to the calling party once the first control command of the user to start the video call is received.

5. Method according to any one of claims 1 to 5, wherein the field of view of the user of the vehicle is determined by one or more interior cameras of the vehicle; and/or
wherein the display in the field of view of the user of the vehicle is determined by one or more interior cameras of the vehicle.

6. Method according to any one or claims 1 to 6, wherein the location is transmitted as a continuous live stream during the video call.

7. System for controlling a video call while driving a vehicle, the system comprising:
a processor,
a memory,
instructions stored within the memory, wherein the instructions, when executed on the processor, cause the system to:
- receive (102) a request to start a video call from a calling party to a user of the vehicle while driving a vehicle;
in response to the request to start the video call from the calling party:
- display (104), by an output interface of the vehicle, the request to start the video call from the calling party to the user of the vehicle;
- receive(106), by an input interface of the vehicle, a first control command of the user to start the video call;
- determine (108) a field of view of the user of the vehicle;
- determine (110) a display in the field of view of the user of the vehicle; and if the user of the vehicle is a driver of the vehicle:
- display (112) a still image corresponding to the video call from the calling party on the determined display in the field of view of the driver; and
- receive (114) a request to accept a location from the calling party during the video call, wherein, to receive the location, a communication channel of the video call is used; and
in response to receive the request to accept the location during the video call:
- display (116), by the output interface of the vehicle, the received request to the user of the vehicle; and
- receive (118), by the input interface of the vehicle, a second control command from the user to receive the location from the calling party;
- when the second control command is received, receiving, over the communication channel of the video call, the location as a continuous live stream from the calling party and storing the received location in a navigation component of the vehicle; and
- adapt a current route of the navigation component based on the received location from the calling party during the video call.

8. Computer program product for controlling a video call while driving a vehicle, the computer program product, when being executed by a processor, is adapted for controlling and/or for carrying out the method as set forth in any one of the claims 1 to 6.

## Patentansprüche

1. Verfahren zur Steuerung eines Videoanrufs während des Fahrens eines Fahrzeugs, wobei das Verfahren Folgendes umfasst:
• Empfangen (102) einer Anfrage zum Starten eines Videoanrufs von einem Anrufer an einen Benutzer des Fahrzeugs während des Fahrens eines Fahrzeugs;
als Reaktion auf die Anfrage zum Starten des Videoanrufs vom Anrufer:
• Anzeigen (104) der Anfrage zum Starten des Videoanrufs vom Anrufer an den Benutzer des Fahrzeugs durch eine Ausgabeschnittstelle des Fahrzeugs;
• Empfangen (106) eines ersten Steuerbefehls des Benutzers zum Starten des Videoanrufs durch eine Eingabeschnittstelle des Fahrzeugs;
• Bestimmen (108) eines Sichtfelds des Benutzers des Fahrzeugs;
• Bestimmen (110) einer Anzeige im Sichtfeld des Benutzers des Fahrzeugs;
wenn der Benutzer des Fahrzeugs ein Fahrer des Fahrzeugs ist:
• Anzeigen (112) eines Standbilds, das dem Videoanruf vom Anrufer entspricht, auf der bestimmten Anzeige im Sichtfeld des Fahrers; und
• Empfangen (114) einer Anfrage zur Annahme eines Standorts vom Anrufer während des Videoanrufs, wobei zum Empfangen des Standorts ein Kommunikationskanal des Videoanrufs verwendet wird; und
als Reaktion auf den Empfang der Anfrage zur Annahme des Standorts während des Videoanrufs:
• Anzeigen (116) der empfangenen Anfrage an den Benutzer des Fahrzeugs durch die Ausgabeschnittstelle des Fahrzeugs; und
• Empfangen (118) eines zweiten Steuerbefehls vom Benutzer zum Empfangen des Standorts vom Anrufer durch die Eingabeschnittstelle des Fahrzeugs;
• wenn der zweite Steuerbefehl empfangen wird, Empfangen des Standorts als kontinuierlichen Live-Stream vom Anrufer über den Kommunikationskanal des Videoanrufs und Speichern des empfangenen Standorts in einer Navigationskomponente des Fahrzeugs; und
• Anpassen einer aktuellen Route der Navigationskomponente basierend auf dem empfangenen Standort vom Anrufer während des Videoanrufs.

2. Verfahren nach Anspruch 1, wobei das Verfahren ferner Folgendes umfasst:
wenn der Benutzer des Fahrzeugs der Fahrer des Fahrzeugs ist:
Anzeigen eines Videostreams des Videoanrufs auf einer oder mehreren Anzeigen außerhalb des Sichtfelds des Fahrers für einen oder mehrere andere Benutzer des Fahrzeugs.

3. Verfahren nach einem der Ansprüche 1 bis 2, wobei das Verfahren ferner Folgendes umfasst:
wenn der Benutzer ein Insasse des Fahrzeugs ist:
• Anzeigen eines Videostreams des Anrufers auf der bestimmten Anzeige im Sichtfeld des Insassen des Fahrzeugs.

4. Verfahren nach einem der Ansprüche 1 bis 3, wobei das Verfahren ferner Folgendes umfasst:
Übertragen eines Videostreams des Benutzers an den Anrufer durch eine Innenkamera des Fahrzeugs, sobald der erste Steuerbefehl des Benutzers zum Starten des Videoanrufs empfangen wird; und/oder
Übertragen eines Videostreams an den Anrufer durch jede Innenkamera des Fahrzeugs, sobald der erste Steuerbefehl des Benutzers zum Starten des Videoanrufs empfangen wird.

5. Verfahren nach einem der Ansprüche 1 bis 5, wobei das Sichtfeld des Benutzers des Fahrzeugs durch eine oder mehrere Innenkameras des Fahrzeugs bestimmt wird; und/oder
wobei die Anzeige im Sichtfeld des Benutzers des Fahrzeugs durch eine oder mehrere Innenkameras des Fahrzeugs bestimmt wird.

6. Verfahren nach einem der Ansprüche 1 bis 6, wobei der Standort als kontinuierlicher Live-Stream während des Videoanrufs übertragen wird.

7. System zur Steuerung eines Videoanrufs während des Fahrens eines Fahrzeugs, wobei das System Folgendes umfasst:
einen Prozessor,
einen Speicher,
im Speicher gespeicherte Anweisungen, wobei die Anweisungen, wenn sie auf dem Prozessor ausgeführt werden, das System veranlassen:
• eine Anfrage zum Starten eines Videoanrufs von einem Anrufer an einen Benutzer des Fahrzeugs während des Fahrens eines Fahrzeugs zu empfangen (102);
als Reaktion auf die Anfrage zum Starten des Videoanrufs vom Anrufer:
• die Anfrage zum Starten des Videoanrufs vom Anrufer an den Benutzer des Fahrzeugs durch eine Ausgabeschnittstelle des Fahrzeugs anzuzeigen (104);
• einen ersten Steuerbefehl des Benutzers zum Starten des Videoanrufs durch eine Eingabeschnittstelle des Fahrzeugs zu empfangen (106);
• ein Sichtfeld des Benutzers des Fahrzeugs zu bestimmen (108);
• eine Anzeige im Sichtfeld des Benutzers des Fahrzeugs zu bestimmen (110); und wenn der Benutzer des Fahrzeugs ein Fahrer des Fahrzeugs ist:
• ein Standbild, das dem Videoanruf vom Anrufer entspricht, auf der bestimmten Anzeige im Sichtfeld des Fahrers anzuzeigen (112); und
• eine Anfrage zur Annahme eines Standorts vom Anrufer während des Videoanrufs zu empfangen (114), wobei zum Empfangen des Standorts ein Kommunikationskanal des Videoanrufs verwendet wird; und
als Reaktion auf den Empfang der Anfrage zur Annahme des Standorts während des Videoanrufs:
• die empfangene Anfrage an den Benutzer des Fahrzeugs durch die Ausgabeschnittstelle des Fahrzeugs anzuzeigen (116); und
• einen zweiten Steuerbefehl vom Benutzer zum Empfangen des Standorts vom Anrufer durch die Eingabeschnittstelle des Fahrzeugs zu empfangen (118);
• wenn der zweite Steuerbefehl empfangen wird, den Standort als kontinuierlichen Live-Stream vom Anrufer über den Kommunikationskanal des Videoanrufs zu empfangen und den empfangenen Standort in einer Navigationskomponente des Fahrzeugs zu speichern; und
• eine aktuelle Route der Navigationskomponente basierend auf dem empfangenen Standort vom Anrufer während des Videoanrufs anzupassen.

8. Computerprogrammprodukt zur Steuerung eines Videoanrufs während des Fahrens eines Fahrzeugs, wobei das Computerprogrammprodukt, wenn es von einem Prozessor ausgeführt wird, zur Steuerung und/oder zur Durchführung des Verfahrens nach einem der Ansprüche 1 bis 6 angepasst ist.

## Revendications

1. Procédé de contrôle d'un appel vidéo pendant la conduite d'un véhicule, le procédé comprenant :
• la réception (102) d'une demande pour démarrer un appel vidéo d'un appelant à un utilisateur du véhicule pendant la conduite d'un véhicule ;
en réponse à la demande de démarrer l'appel vidéo de l'appelant :
• l'affichage (104), par une interface de sortie du véhicule, de la demande de démarrer l'appel vidéo de l'appelant à l'utilisateur du véhicule ;
• la réception (106), par une interface d'entrée du véhicule, d'une première commande de contrôle de l'utilisateur pour démarrer l'appel vidéo ;
• la détermination (108) d'un champ de vision de l'utilisateur du véhicule ;
• la détermination (110) d'un affichage dans le champ de vision de l'utilisateur du véhicule ;
si l'utilisateur du véhicule est un conducteur du véhicule :
• l'affichage (112) d'une image fixe correspondant à l'appel vidéo de l'appelant sur l'affichage déterminé dans le champ de vision du conducteur ; et
• la réception (114) d'une demande pour accepter une localisation de l'appelant pendant l'appel vidéo, où, pour recevoir la localisation, un canal de communication de l'appel vidéo est utilisé ; et
en réponse à la réception de la demande pour accepter la localisation pendant l'appel vidéo :
• l'affichage (116), par l'interface de sortie du véhicule, de la demande reçue à l'utilisateur du véhicule ; et
• la réception (118), par l'interface d'entrée du véhicule, d'une deuxième commande de contrôle de l'utilisateur pour recevoir la localisation de l'appelant ;
• lorsque la deuxième commande de contrôle est reçue, la réception, via le canal de communication de l'appel vidéo, de la localisation sous forme de flux continu en direct de l'appelant et le stockage de la localisation reçue dans un composant de navigation du véhicule ; et
• l'adaptation d'un itinéraire actuel du composant de navigation basée sur la localisation reçue de l'appelant pendant l'appel vidéo.

2. Procédé selon la revendication 1, le procédé comprenant en outre :
si l'utilisateur du véhicule est le conducteur du véhicule :
l'affichage d'un flux vidéo de l'appel vidéo sur un ou plusieurs affichages en dehors du champ de vision du conducteur à un ou plusieurs autres utilisateurs du véhicule.

3. Procédé selon l'une quelconque des revendications 1 à 2, le procédé comprenant en outre :
si l'utilisateur est un occupant du véhicule :
• l'affichage d'un flux vidéo de l'appelant sur l'affichage déterminé dans le champ de vision de l'occupant du véhicule.

4. Procédé selon l'une quelconque des revendications 1 à 3, le procédé comprenant en outre :
la transmission, par une caméra intérieure du véhicule, d'un flux vidéo de l'utilisateur à l'appelant une fois que la première commande de contrôle de l'utilisateur pour démarrer l'appel vidéo est reçue ; et/ou
la transmission, par chaque caméra intérieure du véhicule, d'un flux vidéo à l'appelant une fois que la première commande de contrôle de l'utilisateur pour démarrer l'appel vidéo est reçue.

5. Procédé selon l'une quelconque des revendications 1 à 5, dans lequel le champ de vision de l'utilisateur du véhicule est déterminé par une ou plusieurs caméras intérieures du véhicule ; et/ou
dans lequel l'affichage dans le champ de vision de l'utilisateur du véhicule est déterminé par une ou plusieurs caméras intérieures du véhicule.

6. Procédé selon l'une quelconque des revendications 1 à 6, dans lequel la localisation est transmise sous forme de flux continu en direct pendant l'appel vidéo.

7. Système de contrôle d'un appel vidéo pendant la conduite d'un véhicule, le système comprenant :
un processeur,
une mémoire,
des instructions stockées dans la mémoire, où les instructions, lorsqu'elles sont exécutées sur le processeur, amènent le système à :
• recevoir (102) une demande pour démarrer un appel vidéo d'un appelant à un utilisateur du véhicule pendant la conduite d'un véhicule ;
en réponse à la demande de démarrer l'appel vidéo de l'appelant :
• afficher (104), par une interface de sortie du véhicule, la demande de démarrer l'appel vidéo de l'appelant à l'utilisateur du véhicule ;
• recevoir (106), par une interface d'entrée du véhicule, une première commande de contrôle de l'utilisateur pour démarrer l'appel vidéo ;
• déterminer (108) un champ de vision de l'utilisateur du véhicule ;
• déterminer (110) un affichage dans le champ de vision de l'utilisateur du véhicule ; et si l'utilisateur du véhicule est un conducteur du véhicule :
• afficher (112) une image fixe correspondant à l'appel vidéo de l'appelant sur l'affichage déterminé dans le champ de vision du conducteur ; et
• recevoir (114) une demande pour accepter une localisation de l'appelant pendant l'appel vidéo, où, pour recevoir la localisation, un canal de communication de l'appel vidéo est utilisé ; et
en réponse à la réception de la demande pour accepter la localisation pendant l'appel vidéo :
• afficher (116), par l'interface de sortie du véhicule, la demande reçue à l'utilisateur du véhicule ; et
• recevoir (118), par l'interface d'entrée du véhicule, une deuxième commande de contrôle de l'utilisateur pour recevoir la localisation de l'appelant ;
• lorsque la deuxième commande de contrôle est reçue, recevoir, via le canal de communication de l'appel vidéo, la localisation sous forme de flux continu en direct de l'appelant et stocker la localisation reçue dans un composant de navigation du véhicule ; et
• adapter un itinéraire actuel du composant de navigation basé sur la localisation reçue de l'appelant pendant l'appel vidéo.

8. Produit de programme informatique pour contrôler un appel vidéo pendant la conduite d'un véhicule, le produit de programme informatique, lorsqu'il est exécuté par un processeur, étant adapté pour contrôler et/ou pour réaliser le procédé selon l'une quelconque des revendications 1 à 6.
